# EUROPÄISCHE PATENTSCHRIFT

(11) **EP 1 769 238 B1**
(45) Veröffentlichungstag und Bekanntmachung des Hinweises auf die Patenterteilung: **20.07.2011**
(21) Anmeldenummer: 05742991.2
(22) Anmeldetag: 10.05.2005
(51) Int. Cl.: G01N 27/407, G01K 1/08

(54) **MESSFÜHLER MIT DREIFACHEM SCHUTZOHR**
SENSOR COMPRISING A TRIPLE PROTECTION TUBE
SONDE DE MESURE A TRIPLE TUBE DE PROTECTION

(30) Priorität: 14.07.2004 DE 102004033958
(43) Veröffentlichungstag der Anmeldung: 04.04.2007
(73) Patentinhaber: ROBERT BOSCH GMBH, 70442 Stuttgart (DE)
(72) Erfinder: WEYL, Helmut, 65187 Wiesbaden (DE); HEINZELMANN, Stefan, 71394 Kernen (DE); BUCHHOLZ, Bastian, 70197 Stuttgart (DE)
(86) Internationale Anmeldenummer: PCT/EP2005/052103
(87) Internationale Veröffentlichungsnummer: WO 2006/005641

(56) Entgegenhaltungen:
- EP-A- 0 974 836
- DE-A1- 10 153 735
- DE-A1- 19 628 423

## Beschreibung

### Stand der Technik

Die Erfindung geht aus von einem Messfühler, insbesondere einem Gassensor zur Bestimmung einer physikalischen Eigenschaft eines Messgases, insbesondere der Temperatur oder der Konzentration einer Gaskomponente, insbesondere im Abgas einer Brennkraftmaschine, nach dem Oberbegriff des Anspruchs 1.

Solche Messfühler werden beispielsweise als sog. Lambda-Sonden zur Bestimmung der Sauerstoffkonzentration im Abgas eines Verbrennungsmotors eingesetzt. Der Messfühler ist mit einer elektrischen Eigenheizung versehen; um das gassensitive Sensorelement möglichst rasch, und zwar noch während der Warmlaufphase des Motors, auf seine Betriebstemperatur zu bringen. Das Sensorelement ist aus keramischen Materialien hergestellt. Solche Keramiken sind jedoch sehr empfindlich gegenüber starken Temperafurschwankungen, die zu Rissen in der Keramik und dadurch zu Fehlfunktionen bis hin zum Totalausfall des Messfühlers führten. Extreme Temperaturschwankungen, auch als sog. Thermoschocks bezeichnet, treten an der Oberfläche des Sensorelements beispielsweise beim Start und in der Warmlaufphase des Verbrennungsmotors dann auf, wenn auf das bereits aufgeheizte Sensorelement kalte Wassertropfen aufprallen. Solche Wassertropfen können sich dadurch bilden, dass während der Warmlaufphase der durch die motorische Verbrennung entstehende Wasserdampf an kalten Oberflächen der Abgasanlage und des Messfühlers kondensiert und sich aus dem Kondensatfilm Wassertropfen lösen, die dann vom Gasstrom mitgerissen werden und durch diesen an das Sensorelement geführt werden.

Bei einem bekannten, als Abgassensor eingesetzten Messfühler (DE 199 24 319 C2) ist zum Schutz des Sensorelements gegen Beaufschlagen durch im Abgasstrom mitgeführter Wassertröpfchen ein aus einem Innen- und Außenrohr, die jeweils mit Gaseintritts- und Austrittsöffnungen versehen sind, bestehendes Doppelschutzrohr vorgesehen, das den dem Abgas ausgesetzten Abschnitt des Sensorelements umgibt. An mindestens einer Eintrittsöffnung des Innenrohrs und/oder an mindestens einer Eintrittsöffnung des Außenrohrs ist ein Strömungselement angeordnet, das den in den von Innen- und Außenrohr eingeschlossenen Zwischenraum und/oder in den Innenraum des Innenrohrs eintretenden Abgasstrom in Richtung der jeweiligen inneren Mantelfläche des Innen- und/oder Außenrohrs umlenkt. Dadurch wird das Wasser an den inneren Rohrmantelflächen gehalten, und infolge der mit zunehmendem Warmlaufen des Verbrennungsmotors ansteigenden Temperatur des Abgases verdampft das Wasser allmählich.

Ein weiteres, zentrales Schutzrohr innerhalb des Doppelshutzrohrs, wie im Oberbegriff des Anspruchs 1 definiert, wird in DE10153735 beschrieben.

### Vorteile der Erfindung

Durch die mit dem zentralen Schutzrohr gezielt erreichte Messgasströmung im Doppelschutzrohr und in dem Zwischenraum zwischen dem Innenrohr und dem zentralen Schutzrohr und durch die von den Gasdurchtrittslöchern im zentralen Schutzrohr gebildeten Abrisskanten wird eine gute Verwirbelung des Messgases um den messgasseitigen Abschnitt des Sensorelements herum erreicht, die zusammen mit der Pulsation des Messgases, wie sie üblicherweise im Abgas von Brennkraftmaschinen auftritt, einen schnellen Austausch des Messgases im Innern des zentralen Schutzrohrs bewirkt. Infolge des mit dem zentralen Schutzrohr erreichten, verbesserten Schutzes des Sensorelements können die Gasdurchirittslöcher im Doppelschutzrohr größer gestaltet werden, so dass sie nicht durch sich ablagernde Partikel, z.B. Ruß, zugesetzt werden. Durch die Gasdurchtrittslöcher im Doppelschutzrohr hindurchtretende Partikel werden an dem heißen Rohrmantel des zentralen Schutzrohrs verbrannt, da dieses durch die Nähe zum beheizten Sensorelement und seiner recht dünnen Wandstärke schnell auf eine für den Verbrennungsprozess dieser Partikel ausreichende Temperatur aufgeheizt ist. Dadurch verbessert sich insgesamt die Standzeit und die Dynamik des Messfühlers, die auch unter erschwerten Betriebsbedingungen, wie sie beispielsweise bei einer Einzelzylinderregelung auftreten, erhalten bleibt.

Der erfindungsgemäße Messfühler ist als Lambdasonde mit Vorteilen auch bei Verbrennungsmotoren einsetzbar, bei denen zwischen Leerlauf und Vollast große Temperaturdifferenzen im Abgas auftreten und der Messfühler aus Überhitzungsgründen aus dem heißen Abgasstrom zurückversetzt in das Abgasrohr eingebaut werden muss. Trotz der damit verbundenen längeren Aufheizzeit des Messfühlergehäuses nach dem Kaltstart und des damit verbundenen, zum Teil langzeitigen Nichtüberschreitens der Taupunkttemperatur an der Gehäusemasse bei längerer Leerlaufphasen und bei niedrigen Außentemperaturen wird wirkungsvoll der Schutz des Sensorelements erreicht.

Durch die in den weiteren Ansprüchen aufgeführten Maßnahmen sind vorteilhafte Weiterbildungen und Verbesserungen des im Anspruch 1 angegebenen Messfühlers möglich.

### Zeichnung

Die Erfindung ist anhand eines in der Zeichnung dargestellten Ausführungsbeispiels in der nachfolgenden Beschreibung näher erläutert. Dabei zeigt die Zeichnung ausschnittweise einen Längsschnitt einer Lambdasonde für eine Brennkraftmaschine, insbesondere für einen Verbrennungsmotor eines Kraftfahrzeugs.

### Beschreibung des Ausführungsbeispiels

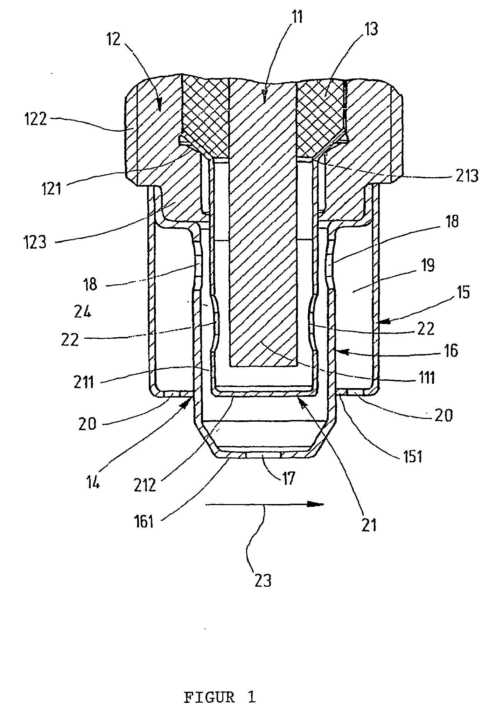

Zur Reduktion der Schadstoffemission von Verbrennungsmotoren in Fahrzeugen wird ein Drei-Wege-Katalysator mit Lambdaregelung eingesetzt Die in Fig. 1 ausschnittweise im Längsschnitt dargestellte Lambdasonde dient dabei zur Steuerung des Luft-Kraftstoffgemisches, um mittels Messung der Konzentration des Sauerstoffgehalts im Abgas ein möglichst stöchiometrisches Gemisch einstellen zu können, so dass durch optimale Verbrennung der Schadstoffausstoss minimiert wird. Diese Lambdasonde wird nachfolgend als Ausführungsbeispiel für einen als Gassensor eingesetzten allgemeinen Messfühler beschrieben, mit dem eine physikalische Eigenschaft eines Messgases, z.B. die Temperatur des Messgases oder die Konzentration einer Gaskomponente im Messgas, gemessen wird.

Die Lambdasonde besitzt ein aus einer Keramik hergestelltes Sensorelement 11 mit einem dem Abgas ausgesetzten, gasseitigen Endabschnitt 111 und einem hier nicht dargestellten, anschlussseitigen Endabschnitt, in dem die elektrische Kontaktierung des Sensorelements 11 zum Anschluss an ein Steuer- und Auswertegerät vorgenommen ist Das Sensorelement 11 ist in einem Fühlergehäuse 12 aufgenommen, von dem in Fig. 1 nur der gasseitige Endbereich dargestellt ist, in dem im Innern des Fühlergehäuses 12 durch Reduzierung des lichten Durchmessers des Fühlergehäuses 12 eine Gehäuseschulter 121 ausgebildet ist. Das Sensorelement 11 ist mittels einer keramischen Dichtung 13, die das Sensorelement 11 spaltlos umschließt, in dem Fühlergehäuse 12 gasdicht eingesetzt und ragt mit dem gasseitigen Endabschnitt aus dem Fühlergehäuse 12 heraus. Das Fühlergehäuse 12 ist mit einem Außengewindeabschnitt 122 versehen, mit dem die Lambdasonde am Einbauort in ein an einem Abgasrohr des Verbrennungsmotors gehaltenes Anschlussstück so eingeschraubt wird, dass der messgasseitige Endabschnitt 111 in den im Abgasrohr geführten Abgasstrom eintaucht.

Der gasseitige Endabschnitt 111 des Sensorelements 11 ist von einem Doppelschutzrohr 14 umschlossen, das auf einem am Fühlergehäuse 12 ausgebildeten Gehäusebund 123 aufgeschoben und mit diesem gasdicht verschweißt ist. Das Doppelschutzrohr 14 besteht aus einem Außenrohr 15 und einem Innerohr 16, das von dem Außenrohr 15 mit Radialabstand konzentrisch umschlossen ist und über das freie Ende des Außenrohrs 15 vorsteht Das Vorstehende verjüngt sich konisch und ist durch einen mit dem Innenrohr 16 einteiligen Rohrboden 161 abgeschlossen. In den Rohrboden 161 ist ein zentrales Stirnloch 17 eingebracht, und nahe dem vom Rohrboden 161 abgekehrten Ende des Innenrohrs 16 sind in der Rohrwand Gasdurchtrittslöcher 18 vorgesehen. Die Gasdurchtrittslöcher 18 sind auf einer Umfangslinie mit vorzugsweise äquidistantem Abstand voneinander angeordnet, so dass sich ein umlaufender Kranz von Gasdurchtrittslöchern 18 ergibt. Das Außenrohr 15 stützt sich über einen mit ihm einstückigen Bodenring 151 am Innerohr 16 ab und ist durch diesen stirnseitig abgedeckt, so dass sich zwischen Außenrohr 15 und Innenrohr 16 ein ringförmiger Spalt 19 ausbildet. Der ringförmige Spalt 19 steht über im Bodenring 151 vorhandene Gasdurchtrittslöcher 20 mit dem Abgasstrom in Verbindung. Die Gasdurchtrittslöoher 20 sind in Umfangsrichtung vorzugsweise äquidistant angeordnet.

Über den gasseitigen Endabschnitt 111 des Sensorelements 11 ist ein zentrales Schutzrohr 21 mit Rohrmantel 211 und Rohrboden 212 gestülpt, das im Fühlergehäuse 12 so befestigt ist, dass es einen Radialabstand sowohl zum Endabschnitt 111 als auch zum Innenrohr 16 einhält. Zur Festlegung im Fühlergehäuse 12 ist das zentrale Schutzrohr 21 an seinem vom Rohrboden 212 abgekehrten Ende 213 konusförmig aufgeweitet und liegt weitgehend formschlüssig auf der Gehäuseschulter 121 auf, wo es durch die Dichtung 13 axial unverschieblich festgelegt ist. Im Rohrmantel 211 des zentralen Schutzrohrs 21 sind Gasdurchtrittslöcher 22 vorhanden, die gegenüber den Gasdurchtritislöchern 18 im Innenrohr 16 zum Rohrboden 212 hin versetzt angeordnet sind. Die Anordnung ist dabei so vorgenommen, dass - wie beim Innerohr 16 - die Gasdurchtrittslöcher 22 auf einer Umfangslinie vorzugsweise äquidistant angeordnet sind und so einen umlaufenden Lochkranz bilden. Die Lochkränze von Innerohr 16 und zentralem Schutzrohr 21 sind voneinander axial beabstandet Sowohl die Position der Gasdurchtrittslöcher 22 als auch deren Anzahl, Form und Größe wird je nach den durch das Abgas vorgegebenen technischen Gegebenheiten variiert. Das Schutzrohr 21 ist dünnwandig in dem Sinne ausgebildet, dass seine Wandstärke kleiner ist als die Wandstärke von Innenrohr 16 oder Außenrohr 15 des Doppelschutzrohrs 14, keinesfalls aber größer.

Ist der Messfühler in das Abgasrohr eingesetzt, so entsteht durch den in das Abgasrohr hineinragenden Endbereich des Messfühlers 11 im Abgasrohr eine Querschnittsverengung. Durch diese Querschnittsverengung wird das Abgas im Bereich des Stirnlochs 17 im Innenrohr 16 beschleunigt und erzeugt in diesem Bereich einen Unterdruck- Gleichzeitig baut sich in Strömungsrichtung (Pfeil 23) des Abgases gesehen vor dem Vorstehende des Innenrohrs 16 über den Gasdurchtritislöchern 20 im Bodenring 151 des Außenrohrs 15 ein Überdruck ruf Das so entstehende Druckgefälle sorgt zusammen mit der Druckpulsation des Abgases für eine Abgasströmung innerhalb der Schutzrohre. Diese Abgasströmung tritt über einen Teil der Gasdurchtrittslöcher 20 im Bodenring 151 des Außenrohrs 15 ein, durchströmt den ringförmigen Spalt 19 zwischen Außen und Innenrohr 15, 16, um über die Gasdurchtrittslöcher 18 im Innenrohr 16 in den Ringspalt 24 zwischen Innenrohr 16 und zentralem Schutzrohr 21 einzutreten. In diesem Ringspalt 24 strömt das Abgas gegensinnig zu der Strömungsrichtung im ringförmigen Spalt 19 und tritt über die Gasdurchtrittslöcher 22 im zentralen Schutzrohr 21 in den Innenraum des zentralen Schutzrohrs 21 ein. Durch die von den Gasdurchtrittslöchern 22 im zentralen Schutzrohr 21 gebildeten Abrisskanten entsteht zusammen mit dem Einfluss durch die Pulsation des Abgases eine starke Verwirbelung des Abgases in dem Gasraum um den Endabschnitt 111 des Sensorelements 11 herum, wodurch das Abgas ausreichend schnell ausgetauscht wird. Das Abströmen des Abgases aus dem Innenraum des zentralen Schutzrohrs 21 erfolgt über den anderen Teil der Gasdurchtrittslöcher 22 und über das Stirnloch 17 des Innenrohrs 16. Durch das zentrale Schutzrohr 21 wird dabei der konvektive und strahlungsbedingte Wärmeverlust des Sensorelements 11 derart reduziert, dass die vorgeschriebene Betriebstemperatur des Sensorelements 11 unter allen Betriebsbedingungen aufrecht erhalten wird. Die Gasdurchtritislöcher 18 im Innenrohr 16 und die Gasdurchtritislöcher 20 im Bodenring 151 des Außenrohrs 15 sind so groß gestaltet, dass sie nicht durch ablagernde Partikel, wie z.B. Ruß, verstopft werden können. Die durch diese relativ großen Gasdurchtrittslöcher 18, 20 zusammen mit dem Abgas hindurchtretenden Partikel werden an der Außenwand des zentralen Schutzrohr 21 verbrannt, da das zentrale Schutzrohr 21 wegen seiner Nähe zum beheizten Sensorelement 11 und seiner Dünnwandigkeit von der Heizung des Sensorelements 11 auf eine Temperatur erwärmt wird, bei denen diese Partikel verbrennen.

## Patentansprüche

1. Messfühler, insbesondere Gassensor zur Bestimmung einer physikalischen Eigenschaft eines Messgases, insbesondere der Temperatur oder der Konzentration einer Gaskomponente, insbesondere im Abgas einer Brennkraftmaschine, mit einem Sensorelement (11), das mit einem dem Messgas ausgesetzten, gasseitigen Endabschnitt (111) aus einem Fühlergehäuse (12) herausragt, und mit einem den gasseitigen Endabschnitt (111) umgebenden Doppelschutzrohr (14), das aus einem Außenrohr (15) und einem mit Gasdurchtrittslöchern (18) versehenen Innenrohr (16) besteht, das von dem Außenrohr (15) mit Radialabstand umschlossen ist und über das freie Ende des Außenrohrs (15) vorsteht, wobei über den gasseitigen Endabschnitt (111) des Sensorelements (11) ein becherförmiges zentrales Schutzrohr (21) mit Rohrmantel (211) und Rohrboden (212) gestülpt ist, das mit Radialabstand vom gasseitigen Endabschnitt (111) und vom Innenrohr (16) angeordnet ist, und dass im Rohrmantel (211) Gasdurchtrittslöcher (22) vorgesehen sind, **dadurch gekennzeichnet, dass** die Gasdurchtrittslöcher (18) des Innenrohrs (16) und die Gasdurchtrittslöcher (22) des zentralen Schutzrohrs (21) jeweils einen umlaufenden Lochkranz bilden, wobei die Gasdurchtrittslöcher (22) des Rohrmantels (211) gegenüber den im Innenrohr (16) vorhandenen Gasdurchtrittslöchern (18) zum Rohrboden (212) hin versetzt angeordnet sind.

2. Messfühler nach Anspruch 1, **dadurch gekennzeichnet, dass** das Vorstehende des Innenrohrs (16) des Doppelschutzrohrs (14) sich konisch verjüngt.

3. Messfühler nach Anspruch 1 oder 2, **dadurch gekennzeichnet, dass** das Vorstehende des Innenrohrs (16) durch einen vorzugsweise mit dem Innenrohr (16) einstückigen Rohrboden (161) abgeschlossen ist und dass im Rohrboden (161) mindestens ein Stirnloch (17) angeordnet ist.

4. Messfühler nach einem der Ansprüche 1- 3, **dadurch gekennzeichnet, dass** sich das Außenrohr (15) über einen vorzugsweise mit dem Außenrohr (15) einstückigen Bodenring (151) außen auf dem Innenrohr (16) abstützt und dass der Bodenring (151) mit in Umfangsrichtung gegeneinander versetzt angeordneten Gasdurchtrittslöchern (20) versehen ist

5. Messfühler nach einem der Ansprüche 1 - 4, **dadurch gekennzeichnet, dass** die Gasdurchtrittslöcher (18) im Innenrohr (16) des Doppelschutzrohrs (14) und die Gasdurchtrittslöcher (22) im Rohrmantel (211) des zentralen Schutzrohrs (21) jeweils kranzartig mit vorzugsweise äquidistantem Abstand über den Rohrumfang verteilt sind und dass die Lochkränze im Innenrohr (16) und zentralem Schutzrohr (21) voneinander axial beabstandet sind.

6. Messfühler nach einem der Ansprüche 1*-*5, **dadurch gekennzeichnet, dass** das zentrale Schutzrohr (21) dünnwandig ausgebildet ist.

7. Messfühler nach Anspruch 6, **dadurch gekennzeichnet, dass** die Wandstärke des zentralen Schutzrohrs (21) kleiner als die Wandstärke des Doppelschutzrohrs (14), höchstens jedoch gleich dieser Wandstärke ist.

8. Messfühler nach einem der Ansprüche 1-7, **dadurch gekennzeichnet, dass** das zentrale Schutzrohr (21) am Fühlergehäuse (12), vorzugsweise formschlüssig, befestigt ist

9. Messfühler nach Anspruch 8, **dadurch gekennzeichnet, dass** das vom Rohrboden (212) abgekehrte Ende (213) des zentralen Schutzrohrs (21) konusartig aufgeweitet ist und auf einer im Fühlergehäuse (12) ausgebildeten Gehäuseschulter (121) aufliegt.

10. Messfühler nach Anspruch 9, **dadurch gekennzeichnet, dass** das Sensorelement (11) über eine es spaltlos umschließende Dichtung (13) an der Innenwand des ' Fühlergehäuses (12) abgestützt ist und dass das zentrale Schutzrohr (21) mit seinem konusartig aufgeweitetem Ende (213) durch die Dichtung (13) auf der Gehäuseschulter (121) axial unverschieblich festgelegt ist.

## Claims

1. Measurement probe, in particular a gas sensor for determining a physical property of a measurement gas, in particular the temperature or the concentration of a gas component, in particular in exhaust gas of an internal combustion engine, having a sensor element (11) which projects from a probe housing (12) with a gas-side end section (111) exposed to the measurement gas, and having a double protective tube (14) which surrounds the gas-side end section (111) and consists of an outer tube (15) and an inner tube (16) which is provided with gas-passage holes (18) and is surrounded at a radial spacing by the outer tube (15) and protrudes beyond the free end of the outer tube (15), there being placed over the gas-side end section (111) of the sensor element (11) a cup-shaped central protective tube (21) which has a tube jacket (211) and tube base (212) and is arranged at a radial spacing from the gas-side end section (111) and from the inner tube (16), and in that gas-passage holes (22) are provided in the tube jacket (211), **characterized in that** the gas-passage holes (18) of the inner tube (16) and the gas-passage holes (22) of the central protective tube (21) respectively form a circumferential perforated ring, the gas-passage holes (22) of the tube jacket (211) being arranged offset with respect to the tube base (212) from the gas-passage holes (18) present in the inner tube (16).

2. Measurement probe according to Claim 1, **characterized in that** the protruding end of the inner tube (16) of the double protective tube (14) tapers conically.

3. Measurement probe according to Claim 1 or 2, **characterized in that** the protruding end of the inner tube (16) is sealed by a tube base (161) that is preferably formed in one piece with the inner tube (16), and **in that** at least one end-face hole (17) is arranged in the tube base (161).

4. Measurement probe according to one of Claims 1-3, **characterized in that** the outer tube (15) is supported outside on the inner tube (16) via a base ring (151) that is preferably formed in one piece with the outer tube (15), and **in that** the base ring (151) is provided with gas-passage holes (20) arranged offset from one another in a circumferential direction.

5. Measurement probe according to one of Claims 1-4, **characterized in that** the gas-passage holes (18) in the inner tube (16) of the double protective tube (14) and the gas-passage holes (22) in the tube jacket (211) of the central protective tube (21) are respectively distributed over the tube periphery in ring-like fashion and preferably at an equidistant spacing, and **in that** the perforated rings in the inner tube (16) and central protective tube (21) are spaced apart axially from one another.

6. Measurement probe according to one of Claims 1-5, **characterized in that** the central protective tube (21) is of thin-walled design.

7. Measurement probe according to Claim 6, **characterized in that** the wall thickness of the central protective tube (21) is smaller than the wall thickness of the double protective tube (14), but at most is equal to said wall thickness.

8. Measurement probe according to one of Claims 1-7, **characterized in that** the central protective tube (21) is fastened, preferably in a positively locking fashion, on the probe housing (12).

9. Measurement probe according to Claim 8, **characterized in that** the end (213), averted from the tube base (212), of the central protective tube (21) is conically widened and rests on a housing shoulder (121) formed in the probe housing (12).

10. Measurement probe according to Claim 9, **characterized in that** the sensor element (11) is supported on the inner wall of the probe housing (12) via a seal (13) enclosing said sensor element (11) without a gap, and **in that** the central protective tube (21) is fixed with its conically widened end (213) on the housing shoulder (121) by the seal (13) so as not to be axially displaceable.

## Revendications

1. Sonde de mesure, notamment capteur à gaz pour déterminer une propriété physique d'un gaz à mesurer, en particulier la température ou la concentration d'un composant gazeux, en particulier dans les gaz d'échappement d'un moteur à combustion interne, comprenant un élément de capteur (11) qui, avec une portion d'extrémité (111) côté gaz, exposée au gaz à mesurer, sort d'un boîtier de sonde (12), et un tube de protection double (14) entourant la portion d'extrémité (111) côté gaz, qui se compose d'un tube extérieur (15) et d'un tube intérieur (16) pourvu d'orifices de passage de gaz (18), qui est entouré par le tube extérieur (15) à distance radiale et qui dépasse au-delà de l'extrémité libre du tube extérieur (15), un tube de protection central (21) en forme de gobelet, avec une enveloppe de tube (211) et un fond de tube (212), étant emboîté par-dessus la portion d'extrémité (111) côté gaz de l'élément de capteur (11) et étant disposé à distance radiale de la portion d'extrémité (111) côté gaz et du tube intérieur (16), des orifices de passage de gaz (22) étant prévus dans l'enveloppe de tube (211), **caractérisée en ce que** les orifices de passage de gaz (18) du tube intérieur (16) et les orifices de passage de gaz (22) du tube de protection central (21) forment à chaque fois une couronne perforée périphérique, les orifices de passage de gaz (22) de l'enveloppe de tube (211) étant disposés de manière décalée vers le fond de tube (212) par rapport aux orifices de passage de gaz (18) prévus dans le tube intérieur (16).

2. Sonde de mesure selon la revendication 1, **caractérisée en ce que** la partie saillante du tube intérieur (16) du tube de protection double (14) se rétrécit sous forme conique.

3. Sonde de mesure selon la revendication 1 ou 2, **caractérisée en ce que** la partie saillante du tube intérieur (16) est terminée par un fond de tube (161) de préférence réalisé d'une seule pièce avec le tube intérieur (16), et **en ce qu'**au moins un orifice frontal (17) est réalisé dans le fond de tube (161).

4. Sonde de mesure selon l'une quelconque des revendications 1 à 3, **caractérisée en ce que** le tube extérieur (15) s'appuie par le biais d'une bague de fond (151) réalisée de préférence d'une seule pièce avec le tube extérieur (15) à l'extérieur sur le tube intérieur (16) et **en ce que** la bague de fond (151) est pourvue d'orifices de passage de gaz (20) disposés de manière décalées les uns par rapport aux autres dans la direction périphérique.

5. Sonde de mesure selon l'une quelconque des revendications 1 à 4, **caractérisée en ce que** les orifices de passage de gaz (18) dans le tube intérieur (16) du tube de protection double (14) et les orifices de passage de gaz (22) dans l'enveloppe de tube (211) du tube de protection central (21) sont répartis à chaque fois comme une couronne avec de préférence un espacement équidistant sur la périphérie du tube, et **en ce que** la couronne perforée dans le tube intérieur (16) et la couronne perforée dans le tube de protection central (21) sont espacées axialement l'une de l'autre.

6. Sonde de mesure selon l'une quelconque des revendications 1 à 5, **caractérisée en ce que** le tube de protection central (21) est réalisé avec des parois minces.

7. Sonde de mesure selon la revendication 6, **caractérisée en ce que** l'épaisseur de paroi du tube de protection central (21) est inférieure à l'épaisseur de paroi du tube de protection double (14), mais est au maximum égale à cette épaisseur de paroi.

8. Sonde de mesure selon l'une quelconque des revendications 1 à 7, **caractérisée en ce que** le tube de protection central (21) est fixé sur le boîtier de sonde (12), de préférence par engagement par correspondance géométrique.

9. Sonde de mesure selon la revendication 8, **caractérisée en ce que** l'extrémité (213) du tube de protection central (21) opposée au fond de tube (212) est élargie en forme de cône et repose sur un épaulement de boîtier (121) réalisé dans le boîtier de sonde (12).

10. Sonde de mesure selon la revendication 9, **caractérisée en ce que** l'élément de capteur (11) est supporté contre la paroi intérieure du boîtier de sonde (12) par le biais d'un joint d'étanchéité (13) l'entourant sans jeu, et **en ce que** le tube de protection central (21) est fixé de manière immobile axialement avec son extrémité (213) élargie en forme de cône par le biais du joint d'étanchéité (13) sur l'épaulement de boîtier (121).
